# EUROPEAN PATENT SPECIFICATION

(11) **EP 3 314 121 B1**
(45) Date of publication and mention of the grant of the patent: **02.10.2019**
(21) Application number: 16813771.9
(22) Date of filing: 15.06.2016
(51) Int. Cl.: F03D 80/80

(54) **CABLE TWISTING SYSTEM WITH ELASTIC DEFORMABLE FIXTURE**
KABELVERDRILLSYSTEM MIT ELASTISCH VERFORMBARER HALTERUNG
SYSTÈME DE TORSION DE CÂBLE AVEC DISPOSITIF ÉLASTIQUE DÉFORMABLE

(30) Priority: 25.06.2015 DK 201570394
(43) Date of publication of application: 02.05.2018
(73) Proprietor: Envision Energy (Denmark) ApS, 8600 Silkeborg (DK)
(72) Inventor: MOESTRUP, Henning, 8800 Viborg (DK)
(74) Representative: Nielsen, Leif
(86) International application number: PCT/DK2016/050185
(87) International publication number: WO 2016/206690

(56) References cited:
- WO-A1-2014/053230
- KR-A- 20130 051 309
- KR-A- 20130 051 309
- KR-A- 20130 051 310
- US-A1- 2010 247 326
- US-A1- 2014 286 778
- US-A1- 2014 286 778

## Description

### Field of the Invention

The present invention relates to a wind turbine having a cable twisting system arranged inside the wind turbine tower for guiding the cables towards the bottom of the wind turbine tower.

### Background of the Invention

It is known to use a cable twisting system to guide power cables, data cables or other types of cables into the wind turbine tower. Yaw movements of the rotor and nacelle cause the cables to rotate around a centre axis of the wind turbine tower and thus twist over a certain axial length. This twisting movement is absorbed in the cable twisting system. A cable loop, i.e. additional length of cable, is typically arranged below the cable system to compensate for the reduction in cable length due to the twisting. During operation these cables may start to oscillate in a radial direction due to bending movements of the wind turbine tower. This oscillation may result in damages to the outer jacket of the cables as the cables are hitting the individual spacer elements in the cable twisting system, thereby resulting in a failure or short circuit in the cables. This oscillation also increases the loads in the individual spacer elements and their respective fixtures, thereby reducing their operating time.

A cable twisting system is disclosed in US 2010/0247326 A1 wherein multiple cables hanging freely downwards from the nacelle are guided through individual holes in multiple spacer plates. Only the lowermost plate is attached to the inner sidewall of the wind turbine tower using fixtures extending in a radial direction, thereby preventing this plate from rotating relative to the wind turbine tower when the cables are twisted. These fixtures also prevent the lowermost spacer from moving in an axial direction, thus only the cables are able to move in the axial direction. During twisting, the cables will be forced into contact with the convex-shaped edges of the holes and thus rub against this surface during their axial movement, thereby causing a failure or short circuit in the cables. Secondly, the cables and spacer plates located above the lowermost plate are likely to start to oscillate radially during operation since the cable twisting system is only fixed at the bottom. This increases the risk of damages to the cables or to the components of the cable twisting system.

One solution is to use a pivotal frame structure or slidable rail arrangement, such as indicated in US 2013/0068496 A1, thereby the lowermost spacer plate moves in the axial direction. Such pivotal frame structure and rail arrangement limit the movement of the spacer element to an axial direction, thus the moment caused by the twisting cables is transferred to the frame structure via the two connecting joints or to the rail structure via the T-shaped arm. The frame structure and connection joints must be designed to withstand both compression and tension loads since the connecting joints are arranged on opposite sides of the spacer plate. The moment generated by spacer element will force the sliding arm into contact with one side of the receiving rail, thus causing an uneven wear of the rail. Furthermore, the sliding arm must also be designed to withstand this moment as the arm is prevented from rotating in a circumference direction.

US 2013/0068496 A1 further discloses guide rings placed around the cable twisting system for reducing the radial movement of the cable twisting system. The guide rings are fixed to the inner sidewall of the wind turbine tower by connecting rods which hold the respective guide ring in a stationary position during twisting of the cables. A U-shaped support rod connected to two adjacent spacer plates is required to prevent the spacer plates from getting stuck in the guide ring where the support rod slides axially inside the guide ring during twisting. This adds to the complexity and costs of the cable twisting system. Since the guide rings are not able to move, the spacer plate and cables will hit the guide rings which may result in damages to the cables or spacer plates.

KR 1020130051309 A discloses another cable twisting system comprising an outer ring connected to an intermediate ring via a plurality of flexible fixtures, wherein the intermediate ring is further rotatable connected to an inner ring of a spacer element via a ball bearing. The spacer element further comprises a plurality of individual holes for receiving and holding the electrical cables. The ball bearing enables the spacer element and inner ring to freely rotate relative to the other two rings when the cables are being twisted. The flexible fixtures dampen the radial movement of the intermediate ring and, thus, the spacer. Another outer ring is further connected to the intermediate ring via support wires. This solution adds to the total number of components and, thus, increases the costs and complexity of the cable twisting system. EP 2762723 A1 also discloses a cable twisting system having a plurality of ring shaped cable spacer elements. The lowermost cable spacer is connected to the wind turbine tower wall via three individual steel wires. The other cable spacers are only fixated to the electrical cables and are thus hanging freely from the nacelle. During twisting the free hanging cable spacer and, thus, the cables are likely to hit the upper platforms causing a failure in the cable spacer or in the insulation surrounding the electrical cables. Each steel wire is further connected to a turn buckle allowing the tension in each wire to be adjusted. Each steel wire is further connected to both the cable spacer and the wind turbine wall in a single point which allows for a high concentration of forces at each connection point. This fixture is thus likely to fail due to the amount of forces generated during twisting of the cables.

US 2014/0286778 A1 discloses a wind turbine comprising a cable twisting system having a plurality of ring shaped spacer elements. A lower spacer element is connected to an outer tube section extending towards an upper spacer element. The upper spacer element has an inner tube section extending partly into the outer tube section. The lower spacer element is capable of rotating relative to the upper spacer element until a finger on the outer tube section is brought into contact with a finger located on the upper spacer element. The lower and upper spacer element are then rotated further together in the same direction. In this solution the cable twisting system is free to move radially between the uppermost and lowermost spacer element.

### Object of the Invention

An object of the invention is to provide a cable twisting system that counteracts the rotational movement of lowermost spacer element.

An object of the invention is to provide a cable twisting system that applies a tension force to the spacer elements during twisting of the cables.

An object of the invention is to provide a cable twisting system that reduces the oscillating movement in a radial direction.

### Description of the Invention

An object of the invention is achieved by a wind turbine comprising:
- a wind turbine tower having an inner sidewall,
- a nacelle arranged on the wind turbine tower, wherein a yaw mechanism is arranged between the wind turbine tower and the nacelle, the yaw mechanism is configured to rotate the nacelle relative to the wind turbine tower,
- a cable twisting system arranged inside the wind turbine tower, the cable twisting system comprises a plurality of spacer elements distributed along an axial centre axis, where each spacer element extends outwards in a radial direction and is configured to guide a plurality of cables which extend outwards from the nacelle and into the interior of the wind turbine tower, wherein a lowermost of said spacer elements is connected to the inner sidewall by at least one first fixture,
- wherein the lowermost spacer element is configured to rotate around the axial centre axis when the cables are twisting during yawing, and where the at least one first fixture is configured to at least apply a first force to the lowermost spacer element to counteract this rotational movement of the lowermost spacer element to bring the lowermost spacer element into an equilibrium position.

The cable twisting system is preferably aligned with the centre of the yawing mechanism to minimise the pulling on the cables when the nacelle is yawing. The cable twisting system extends in an axial/longitudinal direction where the axial height is defined by the uppermost spacer element and lowermost spacer element. Each spacer element extends in a radial/transverse direction towards the inner sidewall and defines at least an outer diameter. The spacer elements are interconnected via one or more wires, ropes or rods which define the distance between the respective spacer elements. The wires, ropes or rods may further connect the uppermost spacer element to the nacelle. The spacer elements may be evenly spaced apart or positioned at incrementing or stepped intervals along the axial length. The cable twisting system is placed in its initial position when the nacelle has a yaw angle of zero. In this position, the cables are in an untwisted state.

The present configuration provides a simple and cheap fixture arrangement of the cable twisting system which allows the individual spacer plates to rotate relative to each other. Unlike conventional fixtures, this configuration allows the lowermost spacer element to move within the radial plane, e.g. rotate around the axial axis and/or move in the radial direction, when said cables are twisting. The first fixture comprises means for dampening this movement of the lowermost spacer element. These means may further be configured to limit this movement, thereby enabling the spacer element to move within a predetermined angular and/or radial range. Said means generate a counteracting force, i.e. a first force, that pulls the spacer element in an opposite direction relative to the movement/rotation generated by the twisting of the cables to bring the lowermost spacer element into an equilibrium position, e.g. angular position. In example, said means may generate a counteracting rotation and/or radical movement that move the spacer element towards its initial position. This rotation of the lowermost spacer element enables loads and stresses in the connecting joints and in the respective fixture to be reduced.

According to a special embodiment, the at least one first fixture is further configured to apply a second force to the lowermost spacer element to dampen the axial movement of the lowermost spacer element when the cables are twisting during yawing.

The first fixture may further comprise other means for dampening the axial movement of the lowermost spacer element. These other means may further be configured to limit the axial movement, thereby enabling the spacer element to move within a predetermined axial range. Alternatively, the axial and rotational movements may be dampen and/or limited by the same means. This reduces the axially upward movement of the lowermost spacer element caused by the twisting of the cables as said means generate a counteracting force, i.e. second force, that pulls the spacer element in an axially downward direction. This also counteracts the inward curving of the twisted cables which occurs between adjacent spacer elements. Conventional pivotal fixtures or sliding rail arrangements do not generate a counteracting force, instead they merely guide the spacer element in an axial direction.

The cable twisting system further extends through a cavity of at least one guiding element arranged relative to the cable twisting system, wherein the at least one guiding element is connected to the inner sidewall by means of at least one second fixture.

One or more guiding elements are positioned relative to the cable twisting system to prevent the cable twisting system from oscillating in a radial direction. These guiding elements are configured to limit the movement of the cable twisting system to a mainly axial movement. Each guiding element comprises an axially extending cavity configured to receive and hold the cable twisting system. The shape of the cavity may be defined by an open-ended cross section, e.g. a U-shaped profile, or a closed cross section, e.g. an O-shaped profile. One or more first fixtures are connected to the lowermost spacer element and the inner sidewall while one or more second fixtures are connected to the guiding element and the inner sidewall. These first and second fixtures may have the same configuration or different configurations.

The guiding element may be divided into two or more sub-parts which, when positioned relative to each other, form the above-mentioned cavity. These sub-parts may then be mounted together using fastening means, e.g. bolts, screws or clamps, or mechanical coupling elements, e.g. a snap lock arrangement or a groove-pin arrangement. Alternatively, at least two of these sub-parts may be joined together by means of one or more hinges. This allows for an easier handling and installation of the guiding element relative to the cable twisting system.

According to a special embodiment, the at least one first or second fixture comprises at least one elastic deformable element, e.g. a spring, configured to deform in a longitudinal direction and return to its initial state depending on the relative movement of the respective spacer element or guiding element.

The relative movement of the lowermost spacer element and/or of the guiding element may in example be absorbed by one or more elastic deformable elements in the respective fixture. These deformable elements may be configured to deform in a longitudinal and/or lateral direction of said deformable element when the spacer element or guiding element moves relative to their initial position due to the twisting of the cables. Said deformable elements and thus the spacer element or guiding element may then return to their initial state as the cables are untwisting. This enables the first and/or second fixture to follow the movement of the respective element while generating a force that counteracts and thus dampens this movement.

The elastic deformable element may be any type of deformable element specifically designed to bend, stretch or compress when load is applied to this deformable element and to return to its initial state when this load is removed. The elasticity of this deformable element may be determined by having a Young's modulus that is lower than a conventional stiff element. In example, the elastic deformable element may be a compression or tension spring, a flexible rod or tube, a rubber band or another suitable elastic deformable element. Alternatively or additionally, the elastic deformable element may be a hydraulic, pneumatic or electromagnetic operated dampening device configured to move a first element, e.g. a piston, relative to a second element, e.g. a chamber, which in turn generates the counteracting force. Said dampening device may be an active or passive operated device.

According to a further special embodiment, said at least one first or second fixture further comprises at least one second fixture element, e.g. a wire or a rod, connected to the at least one elastic deformable element, wherein the at least one second fixture element has a configuration that differs from the at least one deformable element.

The first and/or second fixture may, for example, comprise a single elastic deformable element connected directly to the inner sidewall and the respective spacer element or guiding element. Alternatively, two or more elastic deformable elements may be interconnected and further connected to the inner sidewall and the respective lowermost spacer element or guiding element.

The first and/or second fixture may further comprise at least one second fixture element connected to at least the elastic deformable element. The second fixture element may further be connected to the inner sidewall or the respective spacer element or guiding element. Alternatively, the elastic deformable element may be arranged between two second fixture elements which in turn are connected to the inner sidewall and the respective spacer element or guiding element.

The second fixture element may be any type of stiff or flexible element having a configuration that differs from that of the elastic deformable element. This second fixture element may have a reduced elasticity and thus a higher Young's modulus then that of the elastic deformable element. In example, the second fixture element may be a wire or rope, a stiff rod or tube, or another suitable stiff or flexible element. This allows the load, e.g. the tension force, generated by the motion of the spacer element or guiding element to be transferred to the elastic deformable element thus said second fixture acts as a load transferring element. The second fixture element may further act as a support element for the elastic deformable element if a stiff element is used.

Two or more second fixture elements may be connected to the elastic deformable element at one end and to individual connecting points on the respective spacer element or guiding element at the opposite end. This enables the second fixture elements to be positioned at inclined angles relative to the longitudinal direction of the elastic deformable element. This enables the individual second fixture elements to transfer forces acting in different directions to the elastic deformable element, such as compression and tension forces.

Alternatively or additionally, two or more second fixture elements may be connected to said elastic deformable element and to individual connecting points on the inner sidewall. These second fixture elements may be positioned at inclined angles relative to the longitudinal direction of the elastic deformable element, as described above.

According to one embodiment, the at least one first or second fixture is further configured to apply an initial force, e.g. a pre-tension force, to said lowermost spacer element or guiding element when the cable twisting system is positioned in an initial state.

The elastic deformable element and optionally the second fixture element may in example be arranged so that they generate and apply an initial force, e.g. a pre-tension force, to the respective spacer element or guiding element when the cable twisting system is positioned in its initial state. This further prevents any radial oscillation or axial movement of the cable twisting system during twisting of the cables.

According to one embodiment, at least one of said lowermost spacer element and said guiding element is connected to at least two sets of first or second fixtures, wherein the at least two sets are positioned relative to each other in at least the axial or radial direction.
The first and/or second fixture is arranged in the same or in a different radial plane as the respective spacer element or guiding element. The first and/or second fixture may instead be arranged in a combined axial and radial plane, or in an inclined plane relative to this radial plane of the respective spacer element or guiding element. Alternatively, the first fixture is arranged differently than the second fixture. This enables each individual fixture to be adapted to the selected configuration of the cable twisting system.

In example, the elastic deformable element and the second fixture element may both be arranged within the same radial or inclined plane. Alternatively, one of these elements is arranged in a first plane, e.g. the radial plane, while the other element is arranged in a second plane, e.g. the axial plane.

At least two, preferably three, four, five or six, sets of first and/or second fixtures are preferably arranged radically relative to each other around the cable twisting system. Each set is connected to the inner sidewall and respective spacer element or guiding element at individual connecting points. In example, said sets may be arranged at regular intervals of 120 degrees or less so that the loads from the cable twisting system are distributed between the individual sets of first or second fixtures.

Said sets may alternatively or additionally be arranged axially relative to each other. In example, at least one set may be arranged at one end of the respective spacer element or guiding element while at least another set may be arranged at the opposite end of the spacer element or guiding element. These sets may further be arranged relative to each other in opposite planes so that they experience forces acting in opposite directions, e.g. compression and tension forces, during axial movement of the respective spacer element or guiding element.

According to one embodiment, at least one of said first and second fixtures is placed in a predetermined axial angle relative to the centre axis, wherein the axial angle differs from 90 degrees.

In this embodiment, at least one set of first or second fixtures is placed in a downwardly inclined angle relative to the respective spacer element or guiding element so that it in part extends towards the bottom of the wind turbine tower. In this position, the connecting point at the inner sidewall is located below the connecting point at the spacer element or guiding element. This enables the fixture to apply a downwardly force to the spacer element or guiding element.

At least another set of the first or second fixtures is placed in an upwardly inclined angle relative to the respective spacer element or guiding element so that it in part extends towards the top of the wind turbine tower. In this position, the connecting point at the inner sidewall is located, at least in the initial state, below the connecting point at the spacer element or guiding element. This enables the fixture to apply an upwardly force to the spacer element or guiding element.

According to one embodiment, the cable twisting system further comprises another guiding element connected to an uppermost of said spacer elements and to the nacelle, wherein the uppermost spacer element is configured to follow the yaw movement of the nacelle.

An uppermost guiding element is arranged between the nacelle and the uppermost spacer element. This guiding element is connected to the nacelle, e.g. a mainframe thereof, at one end and to the uppermost spacer element at the opposite end. Mounting means like brackets, bolts or the like may be used to fix the uppermost spacer element and optionally the guiding element to the nacelle so that it follows the yaw movement of the nacelle. The twisting of the cables thus starts within the cable twisting system and not between the nacelle and the twisting system, as is the case with conventional cable twisting systems.

Another cable guiding structure, e.g. a cable stocking unit, may be located inside this guiding element for guiding the cables into the wind turbine tower. This cable guiding structure may be fixed relative to the nacelle so it also follows the yaw movement thereof.

According to one embodiment, the wind turbine further comprises at least one platform arranged inside the wind turbine tower, wherein said cables and cable twisting system extend through a cavity in the at least one platform.
One or more platforms, such as a lift platform, a working platform, or another type of platform, may be arranged inside the wind turbine tower near the upper end. The platforms may be connected to the inner sidewall by mounting means, e.g. using brackets or flanges, or firmly attached by welding. The platform may comprise an inner cavity through which the cable twisting system and the cables extend. A guiding element may be fixed to each platform for allowing the cables to move relative to that platform without accidentally hitting the edges of the platform. This guiding element may extend outwards from an upper or lower end of the platform, or centred relative the platform so it extends outwards from both the upper and lower ends.

The platform may further be outfitted with means that enables a worker to gain access to the platform from the bottom of the wind turbine tower. Additional means for allowing the worker to further enter the nacelle may be arranged on the platform.

According to one embodiment, said at least one guide element is a tubular shaped element having a predetermined axial height and a predetermined minimum inner diameter, wherein the at least one guide element is arranged between two adjacent spacer elements or at least one of the spacer elements is arranged inside the at least one guide element.

In this embodiment, the guiding elements are shaped as tube sections having an inner surface facing the cable twisting system. The guiding element has a circular, elliptical, or polygon-shaped cross-section defining a minimum inner diameter that at least corresponds to the outer dimensions of the spacer element. The spacer element may slide along this inner surface during twisting or untwisting of the cables, e.g. using complementary grooves and tracks located on opposite facing surfaces. Alternatively, a gap may be formed between the guiding element and the cable twisting system so that the spacer element is free to move relative to the guiding element.

The guiding element defines an inner cavity in which a selected spacer element, e.g. the uppermost spacer element, may be arranged. The axial height of the guiding element may correspond to at least the range of axial movement of this selected spacer element. This eliminates the need for any U-shaped support elements between adjacent spacer elements. The guiding elements connected to the nacelle and/or the platforms may have a configuration or axial length that differs from the other guiding elements connected to the second fixtures.

Alternatively, the guiding element may be arranged between two adjacent spacer elements. In this configuration, one or both openings of the guiding element may be shaped, e.g. as a funnel, to prevent the adjacent spacer elements from getting stuck as they are axially moved in or out of the guiding element.

According to one embodiment, the spacer elements are ring-shaped elements each having an outer surface facing the inner sidewall, wherein each spacer element optionally comprises a plurality of sub-elements projecting radially outwards from the outer surface.

In this embodiment, the spacer elements are shaped as rings having a predetermined axial height and radial width. The spacer element has an outer surface defining an outer diameter and an inner surface defining an inner diameter. Said cables may be arranged relative to the outer and/or inner surface. This provides a cheap and lightweight spacer element that allows for easy handling and installation.

Each spacer element may comprise a plurality of through holes or recesses for facilitating the attachment of the cables to the respective spacer element. The cables may firmly be attached or loosely attached to the spacer element using suitable fasteners, such as clamps, cable ties, wires, ropes, bands or other suitable fastening means. The fasteners may be positioned in the holes or recesses for fixing the cables relative to the spacer element. The cables may be arranged and fixed in bundles or individually. This allows for a quick and easy attachment and detachment of individual cables without affecting the attachments of the other cables.

One or more guiding fingers may be arranged relative to the outer surface each having a predetermined radial length and cross-sectional width and height. The fingers may be mounted to the spacer element using fastening means, such as bolts or screws, or a mechanical coupling. Alternatively, the fingers may form part of the spacer element. The fingers may have a circular, elliptical or polygon shaped cross-sectional profile. These fingers define a minimum clearance between the spacer element and the guiding element which prevents the cables from getting squished between the spacer element and the guiding element. The spacer elements and optionally the fingers are made of a suitable material, such as steel, aluminium, plastic, wood or another suitable material.

### Description of the Drawing

The invention is described by example only and with reference to the drawings, wherein:
- Fig. 1: shows an exemplary embodiment of a wind turbine;
- Fig. 2: shows an exemplary cable twisting system according to the invention;
- Fig. 3: shows two platforms and guiding elements arranged relative to the cable twisting system of fig. 2;
- Fig. 4: shows the lowermost spacer element and first fixtures;
- Fig. 5: shows the spacer element of fig. 2 with fingers and wires;
- Fig. 6: shows the guiding element with second fixtures;
- Fig. 7: shows the cable twisting system arranged in the wind turbine tower in an initial state; and
- Fig. 8: shows the cable twisting system of fig. 7 in a twisted state.

In the following text, the figures will be described one by one and the different parts and positions seen in the figures will be numbered with the same numbers in the different figures. Not all parts and positions indicated in a specific figure will necessarily be discussed together with that figure.

### Reference list

- 1.: Wind turbine
- 2.: Wind turbine tower
- 3.: Nacelle
- 4.: Yaw mechanism
- 5.: Wind turbine blades
- 6.: Cable twisting system
- 7.: Spacer elements
- 7a.: Lowermost spacer element
- 7b.: Uppermost spacer element
- 8.: Wires
- 9.: First fixtures
- 10.: Upper platform
- 11.: Lift platform
- 12.: Access means
- 13.: Guiding elements
- 13a.: Upper guiding element
- 14.: Second fixtures
- 15.: Sets of first fixtures
- 16.: Cables
- 17.: Elastic deformable element
- 18.: Second fixture elements
- 19.: Outer surface
- 20.: Inner surface
- 21.: Fingers
- 22.: Through holes
- 23.: Outer surface
- 24.: Inner surface
- 25.: Cavity
- 26.: Sets of second fixtures
- 27.: Inner sidewall
- 28.: Cable support structure
- 29.: Cable loop

### Detailed Description of the Invention

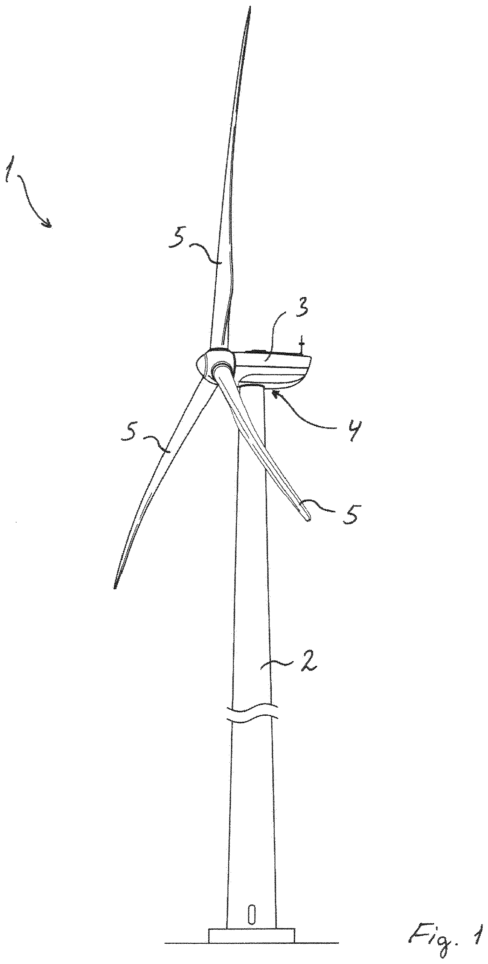

Fig. 1 shows an exemplary wind turbine 1 comprising a wind turbine tower 2 on which a nacelle 3 is arranged. A yaw mechanism 4 is arranged between the nacelle 3 and an upper end of the wind turbine tower 2 so that the nacelle 3 is able to yaw relative to the wind turbine tower using a wind turbine control system (not shown). A rotor comprising a hub and two or more wind turbine blades 5 is rotatably connected to the nacelle 3, here three wind turbine blades are shown.

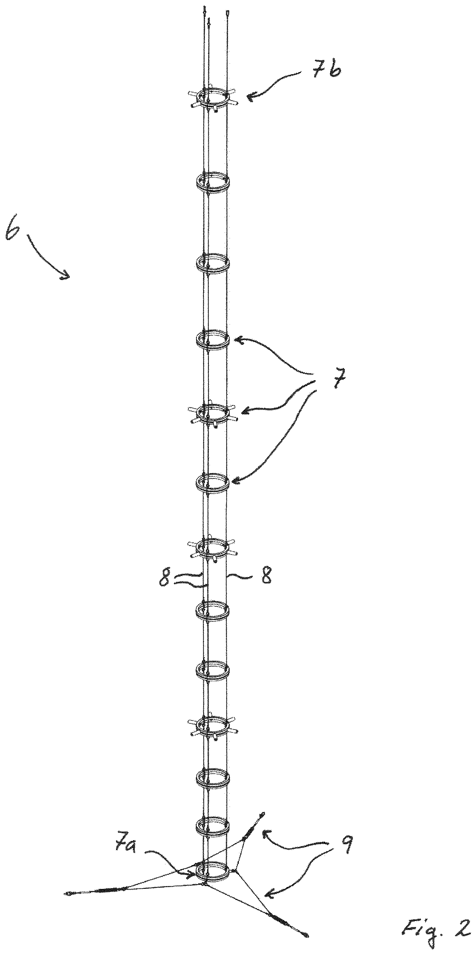

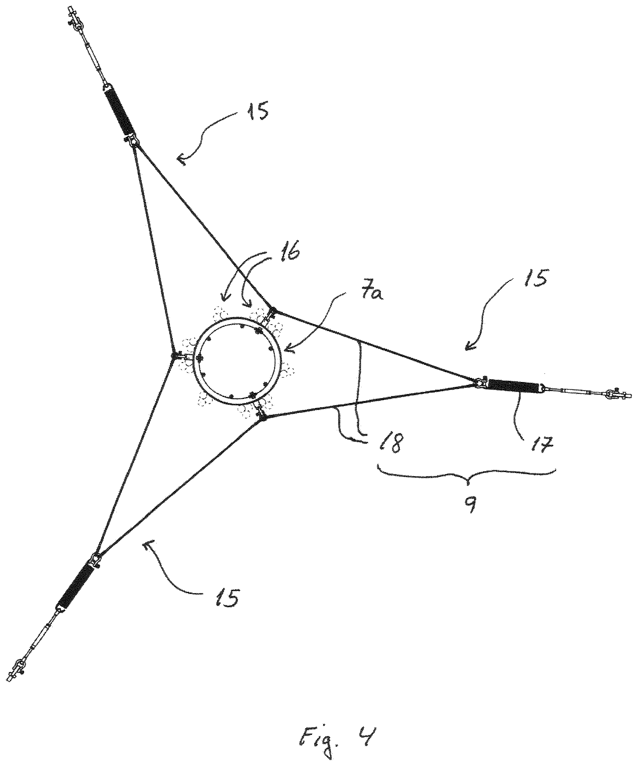

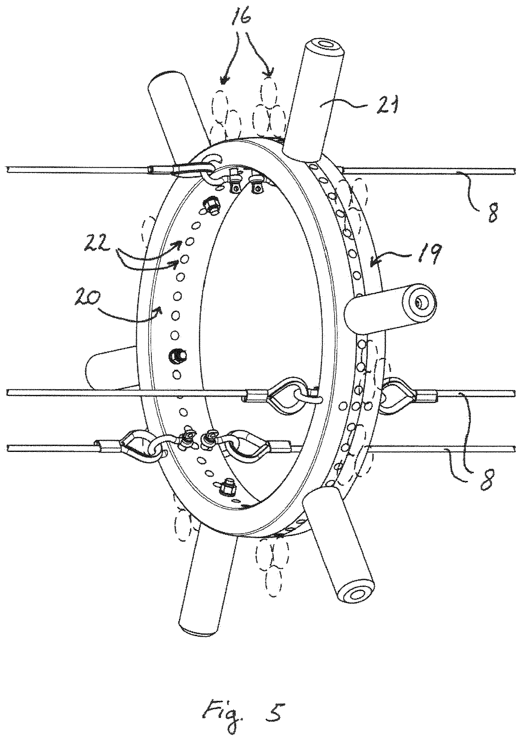

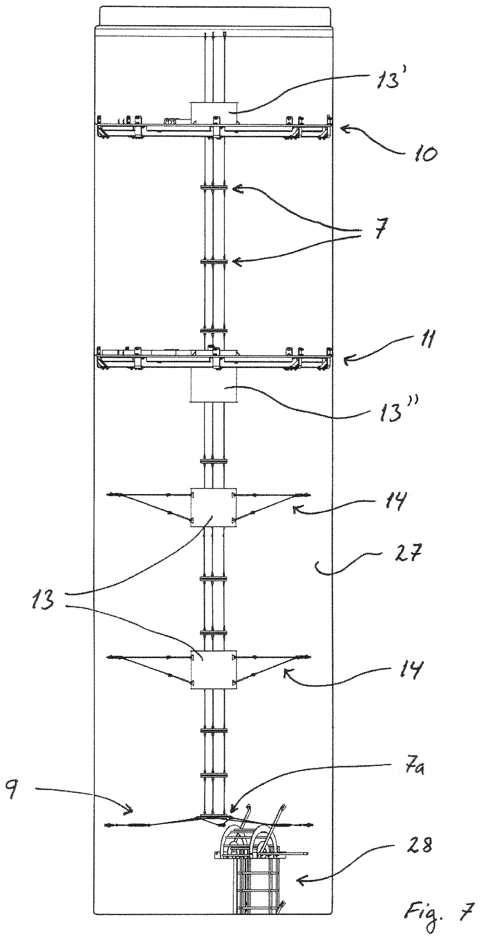

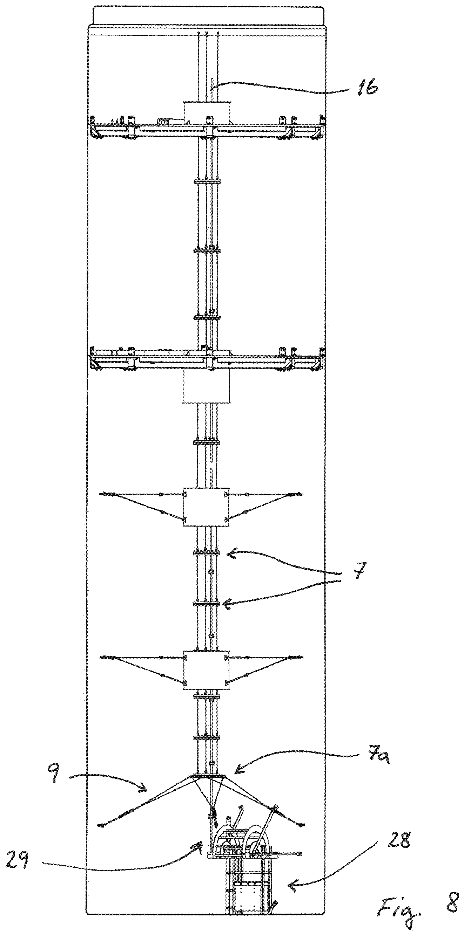

Fig. 2 shows an exemplary embodiment of a cable twisting system 6 configured to be arranged inside the wind turbine tower 2, as shown in figs. 7 and 8. The cable twisting system 6 comprises a plurality of spacer elements 7 distributed along an axial direction. Each spacer element 7 extends in a radial direction and is configured to guide one or more cables (shown in figs. 4 and 5) extending from the nacelle 3 towards the bottom of the wind turbine tower 2. The spacer elements 7 are interconnected to each other via a number of connecting wires 8, here three is shown.

A lowermost spacer element 7a is connected to first fixtures 9 at one end. The first fixtures 9 are at the opposite end configured to be connected to an inner sidewall (shown in figs. 7 and 8) of the wind turbine tower 2. The first fixtures 9 are configured to generate one or more counteracting forces that dampen the relative axial and/rotational movement of the lowermost spacer element 7a occurring when the cables are twisting and untwisting due to the yaw movement. This reduces the axial compression of the cable twisting system 6 as well as the loads acting on the connecting points during twisting of the cables.

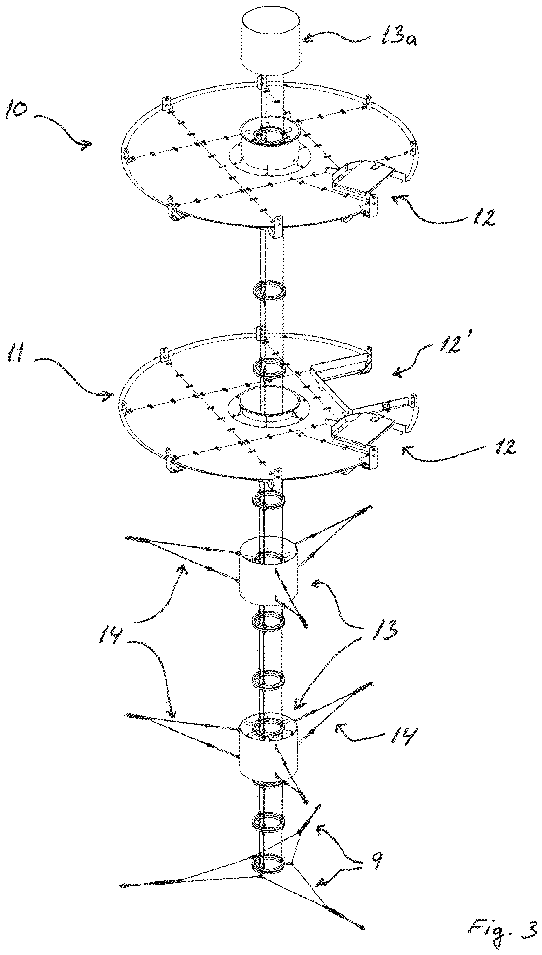

An upper spacer element 7b is configured to be connected to the nacelle 3, preferably via an uppermost guiding element (shown in fig. 3). This enables the uppermost spacer element 7b to follow the yaw movement of the nacelle 3.

Fig. 3 shows two platforms 10,11 arranged relative to the cable twisting system 6, each platform 10,11 is configured to be positioned near to the upper end of the wind turbine tower 2 as shown in figs. 7 and 8.

An upper platform 10 in the form of a working platform is arranged near the upper end of the cable twisting system 6 while another platform 11 in the form of a lift platform is positioned below this upper platform 10 as illustrated. Each platform 10,11 comprises access means 12 configured to provide a worker access to the respective platform. Here, the access means 12 are shown as a recess and hatch for providing access to a ladder (not shown).

Other types of access means 12' configured to provide a worker access to the respective platform may be installed on one of the platforms, e.g. the lift platform 11. Here, the access means 12' are shown as a recess for an elevator (not shown).

One or more guiding elements 13 are further arranged relative to the cable twisting system 6. Here, three guiding elements are shown. The guiding elements 13 are configured to prevent the cable twisting system 6 from oscillating in the radial direction. The guiding elements 13 are connected to second fixtures 14 at one end. The second fixtures 13 are at the opposite end configured to be connected to the inner sidewall (shown in figs. 7 and 8) of the wind turbine tower 2.

The uppermost guiding element 13a is configured to be connected to the nacelle 3 at one end while the opposite end is configured to be connected to the uppermost spacer element 7b (shown in fig. 2).

Fig. 4 shows the lowermost spacer element 7a and the first fixtures 9 seen from the axial direction. Here, three sets 15 of first fixtures 9 are shown. The cables 16 (dotted lines) are arranged in bundles and distributed along the periphery of the lowermost spacer element 7a.

The first fixture 9 comprises an elastic deformable element 17, e.g. a spring, configured to generate the counteracting forces when load is applied to this element. Two second fixture elements 18, e.g. wires, are connected to the elastic deformable element 17 for transferring loads to the elastic deformable element 17. The second fixture elements 18 are preferably placed in opposite inclined angles relative to the longitudinal direction of the elastic deformable element 17. The second fixture elements 18 are further connected to individual radial connecting points located on the outer surface of the lowermost spacer element 7a as illustrated.

Fig. 5 shows the spacer element 7, e.g. an intermediate spacer element or the uppermost spacer element 7b. The ring-shaped spacer element 7 has an outer surface 19 and an inner surface 20. A plurality of fingers 21 extend outwardly from the outer surface 19 and define a minimum clearance between the spacer element 7 and the respective guiding element as indicated in fig. 3. The cables 16 are arranged between the fingers 21 as illustrated.

The spacer element 7 is provided with a plurality of through holes 22 extending between the inner and outer surfaces 19, 20. The holes 22 may be used to mount the fingers 21 using fastenings means as indicated. The holes 22 may also be used to mount the connecting means for the wires 8, alternatively separate mounting holes may be used as indicated. The cables 16 are fixed relative to the outer surface 19 using fastening means, e.g. cable ties, extending through the holes 22.

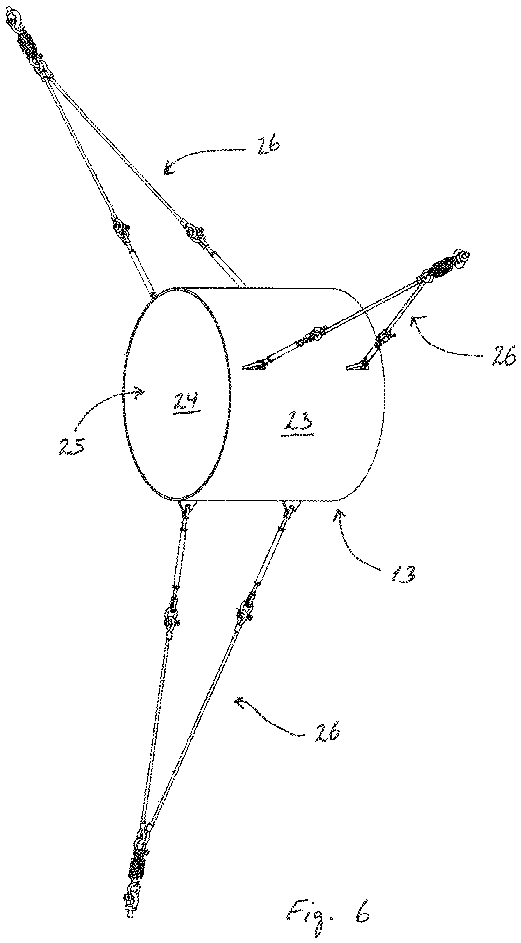

Fig. 6 shows the guiding element 13 having an outer surface 23 and an inner surface 24 facing the fingers 21 of the spacer element 7 when installed. The tube-shaped guiding element 13 forms a cavity 25 in which the respective spacer element is positioned.

Here, three sets 26 of second fixtures 14 are illustrated. The sets 26 differ from the sets 15 since the sets 26 are arranged in an axial plane while the sets 15 are arranged in a substantially radial plane, as indicated in fig. 7. The individual connecting points for the two second fixture elements 18 are in this configuration arranged at opposite axial ends of the outer surface 23.

Fig. 7 shows the cable twisting system 6 arranged in the wind turbine tower 2 in an initial state while fig. 8 shows the cable twisting system 6 in a twisted state.

A guiding element 13', 13" is arranged relative to each of the platforms 10,11 for preventing the cables 16 from hitting the edges of the platform 10,11. These guiding elements 13',13" have at least an axial length that differs from the guiding elements 13. The guiding elements 13',13" are further fixed relative to the platforms 10,11.

A cable support structure 28 is arranged below the cable twisting system 6 and mounted to the inner sidewall 27 of the wind turbine tower 2. The cable support structure 28 is configured to further guide the cables 16 towards the bottom of the wind turbine tower 2. A cable loop 29 is further formed below the cable twisting system 6 for compensating for the axial movement of the cables 16 during twisting.

When the nacelle 3 has a yaw angle of zero, the cable twisting system 6 and the lowermost spacer element 7a are in the initial state. As the nacelle 3 yaws in one direction to track the wind, the cables 16 start to twist which in turn will force the spacer elements 7 below the uppermost spacer element (not shown) to rotate accordingly. The lowermost spacer element 7a is in turn rotated and moved upwardly towards the position shown in fig. 8. The first fixtures 9 will then counteract the forced axial and rotational movements of the lowermost spacer element 7a. As the nacelle 3 yaws in the opposite direction, then cables 16 are untwisted and then spacer elements 7, 7b are moved towards the positions shown in fig. 7 again.

## Claims

1. A wind turbine (1) comprising:
- a wind turbine tower (2) having an inner sidewall (27),
- a nacelle (3) arranged on the wind turbine tower (2), wherein a yaw mechanism (4) is arranged between the wind turbine tower (2) and the nacelle (3), the yaw mechanism (4) is configured to rotate the nacelle (3) relative to the wind turbine tower (2),
- a cable twisting system (6) arranged inside the wind turbine tower (2), the cable twisting system (6) comprises a plurality of spacer elements (7) distributed along an axial centre axis, where each spacer element (7) extends outwards in a radial direction and is configured to guide a plurality of cables (16) which extend outwards from the nacelle (3) and into the interior of the wind turbine tower (2), wherein a lowermost (7a) of said spacer elements is connected to the inner sidewall (27) by at least one first fixture (9),
- wherein the lowermost spacer element (7a) is configured to rotate around the axial centre axis when the cables (16) are twisting during yawing, and where the at least one first fixture (9) is configured to at least apply a first force to the lowermost spacer element (7a) to counteract this rotational movement of the lowermost spacer element (7a) to bring the lowermost spacer element (7a) into an equilibrium position **characterised in that** the cable twisting system (6) further extends through a cavity (25) of at least one guiding element (13) arranged relative to the cable twisting system (6), wherein the at least one guiding element (13) is connected to the inner sidewall (27) by means of at least one second fixture (14).

2. A wind turbine according to claim 1, **characterised in that** the at least one first fixture (9) is further configured to apply a second force to the lowermost spacer element (7a) to dampen the axial movement of the lowermost spacer element (7a) when the cables (16) are twisting during yawing.

3. A wind turbine according to claim 1 or 2, **characterised in that** the at least one first or second (9, 14) fixture comprises at least one elastic deformable element (17), e.g. a spring, configured to deform in a longitudinal direction and return to its initial state depending on the relative movement of the respective spacer element (7) or guiding element (13).

4. A wind turbine according to claim 3, **characterised in that** said at least one first or second fixture (9, 14) further comprises at least one second fixture element (18), e.g. a wire or a rod, connected to the at least one elastic deformable element (17), wherein the at least one second fixture element (18) has a configuration that differs from the at least one deformable element (17).

5. A wind turbine according to any one of claims 1 to 4, **characterised in that** the at least one first or second fixture (9, 14) is further configured to apply an initial force, e.g. a pre-tension force, to said lowermost spacer element (7a) or guiding element (13) when the cable twisting system (6) is positioned in an initial state.

6. A wind turbine according to any one of claims 1 to 5, **characterised in that** at least one of said lowermost spacer element (7a) and said guiding element (13) is connected to at least two sets (15, 26) of first or second fixtures (9, 14), wherein the at least two sets (15, 26) are positioned relative to each other in at least the axial or radial direction.

7. A wind turbine according to any one of claims 1 to 6, **characterised in that** at least one of said first and second fixtures (9, 14) is placed in a predetermined axial angle relative to the centre axis, wherein the axial angle differs from 90 degrees.

8. A wind turbine according to any one of claims 1 to 7, **characterised in that** the cable twisting system (6) further comprises another guiding element (13a) connected to an uppermost (7b) of said spacer elements and to the nacelle (3), wherein the uppermost spacer element (7b) is configured to follow the yaw movement of the nacelle (3).

9. A wind turbine according to any one of claims 1 to 8, **characterised in that** the wind turbine (1) further comprises at least one platform (10, 11) arranged inside the wind turbine tower (2), wherein said cables (16) and cable twisting system (6) extend through a cavity in the at least one platform (10, 11).

10. A wind turbine according to any one of claims 1 to 9, **characterised in that** said at least one guide element (13) is a tubular shaped element having a predetermined axial height and a predetermined minimum inner diameter, wherein the at least one guide element (13) is arranged between two adjacent spacer elements (7) or at least one of the spacer elements (7) is arranged inside the at least one guide element (13).

11. A wind turbine according to any one of claims 1 to 10, **characterised in that** the spacer elements (7) are ring-shaped elements each having an outer surface (19) facing the inner sidewall (27), wherein each spacer element (7) optionally comprises a plurality of sub-elements (21) projecting radially outwards from the outer surface (19).

## Patentansprüche

1. Windkraftanlage (1), umfassend:
- einen Windkraftanlagenturm (2), der eine innere Seitenwand (27) aufweist,
- eine Gondel (3), die an dem Windkraftanlagenturm (2) angeordnet ist, wobei ein Windnachführungsmechanismus (4) zwischen dem Windkraftanlagenturm (2) und der Gondel (3) angeordnet ist, wobei der Windnachführungsmechanismus (4) konfiguriert ist, um die Gondel (3) relativ zum Windkraftanlagenturm (2) zu drehen,
- ein Kabelverdrillsystem (6), das innerhalb des Windkraftanlagenturms (2) angeordnet ist, wobei das Kabelverdrillsystem (6) eine Vielzahl von Abstandshalterelementen (7) umfasst, die entlang einer axialen Mittelachse verteilt ist, wobei sich jedes Abstandshalterelement (7) nach außen in einer radialen Richtung erstreckt und konfiguriert ist, um eine Vielzahl von Kabeln (16), die von der Gondel (3) nach außen und in das Innere des Windkraftanlagenturms (2) verlaufen, zu führen, wobei ein unterstes (7a) der Abstandshalterelemente mit der inneren Seitenwand (27) durch mindestens eine erste Halterung (9) verbunden ist,
- wobei das unterste Abstandshalterelement (7a) konfiguriert ist, um sich um die axiale Mittelachse zu drehen, wenn sich die Kabel (16) während der Windnachführung verdrillen, und wobei die mindestens eine erste Halterung (9) konfiguriert ist, um mindestens eine erste Kraft auf das unterste Abstandshalterelement (7a) aufzubringen, um dieser Drehbewegung des untersten Abstandshalterelements (7a) entgegenzuwirken, um das unterste Abstandshalterelement (7a) in eine Gleichgewichtsposition zu bringen, **dadurch gekennzeichnet, dass** das Kabelverdrillsystem (6) ferner durch einen Hohlraum (25) mindestens eines Führungselements (13), das relativ zum Kabelverdrillsystem (6) angeordnet ist, verläuft, wobei das mindestens eine Führungselement (13) mit der inneren Seitenwand (27) mittels mindestens einer zweiten Halterung (14) verbunden ist.

2. Windkraftanlage nach Anspruch 1, **dadurch gekennzeichnet, dass** die mindestens eine erste Halterung (9) ferner konfiguriert ist, um eine zweite Kraft auf das unterste Abstandshalterelement (7a) aufzubringen, um die axiale Bewegung des untersten Abstandshalterelements (7a) zu dämpfen, wenn sich die Kabel (16) während der Windnachführung verdrillen.

3. Windkraftanlage nach Anspruch 1 oder 2, **dadurch gekennzeichnet, dass** die mindestens eine erste oder zweite (9, 14) Halterung mindestens ein elastisches verformbares Element (17), z. B. eine Feder, umfasst, das konfiguriert ist, um sich abhängig von der relativen Bewegung des jeweiligen Abstandshalterelements (7) oder Führungselements (13) in einer Längsrichtung zu verformen und in seinen ursprünglichen Zustand zurückzukehren.

4. Windkraftanlage nach Anspruch 3, **dadurch gekennzeichnet, dass** die mindestens eine erste oder zweite Halterung (9, 14) ferner mindestens ein zweites Halterungselement (18), z. B. einen Draht oder eine Stange, umfasst, das mit dem mindestens einen elastischen verformbaren Element (17) verbunden ist, wobei das mindestens eine zweite Halterungselement (18) eine Konfiguration aufweist, die sich von dem mindestens einen verformbaren Element (17) unterscheidet.

5. Windkraftanlage nach einem der Ansprüche 1 bis 4, **dadurch gekennzeichnet, dass** die mindestens eine erste oder zweite Halterung (9, 14) ferner konfiguriert ist, um eine anfängliche Kraft, z. B. eine Vorspannkraft, auf das unterste Abstandshalterelement (7a) oder Führungselement (13) aufzubringen, wenn das Kabelverdrillsystem (6) in einem anfänglichen Zustand positioniert ist.

6. Windkraftanlage nach einem der Ansprüche 1 bis 5, **dadurch gekennzeichnet, dass** mindestens eines aus dem untersten Abstandshalterelement (7a) und dem Führungselement (13) mit mindestens zwei Sätzen (15, 26) erster oder zweiter Halterungen (9, 14) verbunden ist, wobei die mindestens zwei Sätze (15, 26) relativ zueinander in mindestens der axialen oder radialen Richtung angeordnet sind.

7. Windkraftanlage nach einem der Ansprüche 1 bis 6, **dadurch gekennzeichnet, dass** mindestens eine aus der ersten und der zweiten Halterung (9, 14) in einem vorbestimmten axialen Winkel relativ zur Mittelachse angeordnet ist, wobei der axiale Winkel anders als 90 Grad ist.

8. Windkraftanlage nach einem der Ansprüche 1 bis 7, **dadurch gekennzeichnet, dass** das Kabelverdrillsystem (6) ferner ein anderes Führungselement (13a) umfasst, das mit einem obersten (7b) der Abstandshalterelemente und mit der Gondel (3) verbunden ist, wobei das oberste Abstandshalterelement (7b) konfiguriert ist, um der Windnachführungsbewegung der Gondel (3) zu folgen.

9. Windkraftanlage nach einem der Ansprüche 1 bis 8, **dadurch gekennzeichnet, dass** die Windkraftanlage (1) ferner mindestens eine Plattform (10, 11) umfasst, die innerhalb des Windkraftanlagenturms (2) angeordnet ist, wobei die Kabel (16) und das Kabelverdrillsystem (6) durch einen Hohlraum in der mindestens einen Plattform (10, 11) verlaufen.

10. Windkraftanlage nach einem der Ansprüche 1 bis 9, **dadurch gekennzeichnet, dass** das mindestens eine Führungselement (13) ein röhrenförmiges Element ist, das eine vorbestimmte axiale Höhe und einen vorbestimmten Mindestinnendurchmesser aufweist, wobei das mindestens eine Führungselement (13) zwischen zwei angrenzenden Abstandshalterelementen (7) angeordnet ist oder mindestens eines der Abstandshalterelemente (7) innerhalb des mindestens einen Führungselements (13) angeordnet ist.

11. Windkraftanlage nach einem der Ansprüche 1 bis 10, **dadurch gekennzeichnet, dass** die Abstandshalterelemente (7) ringförmige Elemente sind, die eine Außenfläche (19) aufweisen, die der inneren Seitenwand (27) zugewandt ist, wobei jedes Abstandshalterelement (7) optional eine Vielzahl von Unterelementen (21) umfasst, die von der Außenfläche (19) radial nach außen vorragt.

## Revendications

1. Éolienne (1) comprenant :
- une tour d'éolienne (2) ayant une paroi latérale interne (27),
- une nacelle (3) agencée sur la tour d'éolienne (2), dans laquelle un mécanisme de lacet (4) est agencé entre la tour d'éolienne (2) et la nacelle (3), le mécanisme de lacet (4) étant conçu pour faire tourner la nacelle (3) par rapport à la tour d'éolienne (2),
- un système de torsion de câble (6) agencé à l'intérieur de la tour d'éolienne (2), le système de torsion de câble (6) comprend une pluralité d'éléments d'espacement (7) répartis le long d'un axe central axial, où chaque élément d'espacement (7) s'étend vers l'extérieur dans une direction radiale et est conçu pour guider une pluralité de câbles (16) qui s'étendent vers l'extérieur à partir de la nacelle (3) et dans l'intérieur de la tour d'éolienne (2), dans laquelle un élément d'espacement le plus inférieur (7a) desdits éléments d'espacement est relié à la paroi latérale interne (27) par au moins un premier dispositif (9),
- dans laquelle l'élément d'espacement le plus inférieur (7a) est configuré pour tourner autour de l'axe central axial lorsque les câbles (16) se tordent au cours d'un lacet, et où l'au moins un premier dispositif (9) est conçu pour au moins appliquer une première force sur l'élément d'espacement le plus inférieur (7a) pour contrecarrer ce mouvement de rotation de l'élément d'espacement le plus inférieur (7a) pour amener l'élément d'espacement le plus inférieur (7a) dans une position d'équilibre, **caractérisée en ce que** le système de torsion de câble (6) s'étend en outre à travers une cavité (25) d'au moins un élément de guidage (13) agencé par rapport au système de torsion de câble (6), dans laquelle l'au moins un élément de guidage (13) est relié à la paroi latérale interne (27) au moyen d'au moins un second dispositif (14).

2. Éolienne selon la revendication 1, **caractérisée en ce que** l'au moins un premier dispositif (9) est en outre conçu pour appliquer une seconde force sur l'élément d'espacement le plus inférieur (7a) pour amortir le mouvement axial de l'élément d'espacement le plus inférieur (7a) lorsque les câbles (16) se tordent au cours d'un lacet.

3. Éolienne selon la revendication 1 ou 2, **caractérisée en ce que** l'au moins un premier ou second (9, 14) dispositif comprend au moins un élément élastique déformable (17), par ex. un ressort, configuré pour se déformer dans une direction longitudinale et revenir à son état initial en fonction du mouvement relatif de l'élément d'espacement (7) ou de l'élément de guidage (13) respectif.

4. Éolienne selon la revendication 3, **caractérisée en ce que** ledit au moins un premier ou second dispositif (9, 14) comprend en outre au moins un second élément de dispositif (18), par ex. un fil ou une tige, relié à l'au moins un élément élastique déformable (17), dans laquelle l'au moins un second élément de dispositif (18) possède une configuration qui diffère de l'au moins un élément déformable (17).

5. Éolienne selon l'une quelconque des revendications 1 à 4, **caractérisée en ce que** l'au moins un premier ou second dispositif (9, 14) est en outre conçu pour appliquer une force initiale, par ex. une force de pré-tension, sur ledit élément d'espacement le plus inférieur (7a) ou élément de guidage (13) lorsque le système de torsion de câble (6) est positionné dans un état initial.

6. Éolienne selon l'une quelconque des revendications 1 à 5, **caractérisée en ce qu'**au moins l'un dudit élément d'espacement le plus inférieur (7a) et dudit élément guidage (13) est relié à au moins deux ensembles (15, 26) de premier ou second dispositifs (9, 14), dans laquelle lesdits au moins deux ensembles (15, 26) sont positionnés l'un par rapport à l'autre dans au moins la direction axiale ou radiale.

7. Éolienne selon l'une quelconque des revendications 1 à 6, **caractérisée en ce qu'**au moins l'un desdits premier ou second dispositifs (9, 14) est placé selon un angle axial prédéterminé par rapport à l'axe central, dans laquelle l'angle axial diffère de 90 degrés.

8. Éolienne selon l'une quelconque des revendications 1 à 7, **caractérisée en ce que** le système de torsion de câble (6) comprend en outre un autre élément de guidage (13a) relié à un élément d'espacement le plus supérieur (7b) desdits éléments d'espacement et à la nacelle (3), dans laquelle l'élément d'espacement le plus supérieur (7b) est conçu pour suivre le mouvement de lacet de la nacelle (3).

9. Éolienne selon l'une quelconque des revendications 1 à 8, **caractérisée en ce que** l'éolienne (1) comprend en outre au moins une plate-forme (10, 11) agencée à l'intérieur de la tour d'éolienne (2), dans laquelle lesdits câbles (16) et système de torsion de câble (6) s'étendent à travers une cavité dans l'au moins une plate-forme (10, 11).

10. Éolienne selon l'une quelconque des revendications 1 à 9, **caractérisée en ce que** ledit au moins un élément de guidage (13) est un élément de forme tubulaire ayant une hauteur axiale prédéterminée et un diamètre interne minimal prédéterminé, dans laquelle l'au moins un élément de guidage (13) est agencé entre deux éléments d'espacement adjacents (7) ou au moins l'un des éléments d'espacement (7) est agencé à l'intérieur de l'au moins un élément de guidage (13).

11. Éolienne selon l'une quelconque des revendications 1 à 10, **caractérisée en ce que** les éléments d'espacement (7) sont des éléments en forme d'anneau ayant chacun une surface externe (19) faisant face à la paroi latérale interne (27), dans laquelle chaque élément d'espacement (7) comprend facultativement une pluralité de sous-éléments (21) faisant saillie radialement vers l'extérieur à partir de la surface externe (19).
